Europäisches Patentamt

European Patent Office

Office européen des brevets

(19)

(11) Veröffentlichungsnummer: **0 300 233 B1**

(12) **EUROPÄISCHE PATENTSCHRIFT**

(45) Veröffentlichungstag der Patentschrift: 21.08.91

(51) Int. Cl.⁵: **B62D 1/12**

(21) Anmeldenummer: 88110247.9

(22) Anmeldetag: 28.06.88

(54) Verfahren und Vorrichtung zum Rangieren eines Fahrzeugs.

(30) Priorität: 21.07.87 DE 3724070

(43) Veröffentlichungstag der Anmeldung:
25.01.89 Patentblatt 89/04

(45) Bekanntmachung des Hinweises auf die
Patenterteilung:
21.08.91 Patentblatt 91/34

(84) Benannte Vertragsstaaten:
DE FR GB IT

(56) Entgegenhaltungen:
DE-A- 1 530 476
DE-A- 3 423 078

(73) Patentinhaber: **ALFRED TEVES GMBH**
**Guerickestrasse 7**
**W-6000 Frankfurt/Main 90(DE)**

(72) Erfinder: **Klein, Hans-Christof**
**Hofheimer Strasse 22**
**W-6234 Hattersheim(DE)**
Erfinder: **Drott, Peter**
**Am Kunzengarten 43**
**W-6230 Frankfurt/Main 80(DE)**
Erfinder: **Lohberg, Peter**
**Am Ringelsberg 7**
**W-6382 Friedrichsdorf(DE)**

(74) Vertreter: **Blum, Klaus-Dieter, Dipl.-Ing.**
**c/o ALFRED TEVES GMBH Guerickestrasse 7**
**W-6000 Frankfurt/Main 90(DE)**

## Beschreibung

Die Erfindung bezieht sich auf ein Verfahren und eine Vorrichtung zum Rangieren eines Fahrzeugs mit Rädern, die über einen Lenkmechanismus mit einem Lenkrad verbunden sind, mit einem Antriebsmotor, einer Kupplung, einer Hilfsenergiequelle und einem Schaltgetriebe, das mehrere Vorwärtsgänge und einen Rückwärtsgang aufweist.

Es ist bekannt, bei Kraftfahrzeugen Servolenkungen einzusetzen, um den Kraftaufwand für die Drehung des Lenkrads, insbesondere bei geringen Geschwindigkeiten, zu vermindern. Bekannt sind auch automatische Getriebe, die die Bedienung von Kraftfahrzeugen erleichtern.

Der Erfindung liegt die Aufgabe zugrunde, zum Rangieren, insbesondere für Parklenkvorgänge eines Fahrzeugs ein Verfahren und eine Vorrichtung zu entwickeln, die dem Lenker des Fahrzeugs das Rangieren bei sehr langsamen Geschwindigkeiten und auch das Lenken im Stand wesentlich erleichtern. Die Erleichterung soll sich dabei insbesondere auf die Verminderung der aufzuwendenden Körperkraft und der Betätigungswege, d.h. der Umgreifbewegungen, sowohl bei Lenk- als auch bei Fahrtrichtungsänderungen beziehen.

Diese Aufgabe wird für das Verfahren erfindungsgemäß dadurch gelöst, daß ein Lenk-Aktuator, der auf zwei zueinander entgegengesetzte Wirkungsrichtungen einstellbar ist, und Schalt-Aktuatoren für den ersten Vorwärtsgang und den Rückwärtsgang in Betriebsbereitschaft versetzt werden, daß die Geschwindigkeit des Fahrzeugs auf Null oder auf einen niedrigen, unter einem oberen Schwellenwert liegenden Wert vermindert wird, daß die Kupplung geöffnet und über ein von Hand betätigbares Steuerelement der erste Vorwärtsgang oder der Rückwärtsgang ausgewählt und der zugeordnete Schalt-Aktuator an die Hilfsenergiequelle gelegt wird, daß die Kupplung geschlossen und das Fahrzeug auf eine unterhalb des Schwellenwerts liegende Geschwindigkeit beschleunigt werden, und daß mit einem von Hand betätigbaren Lenkhebel die Wirkungsrichtungen des Lenk-Aktuators entsprechend dem Fahrzeugkurs ausgewählt und der Lenk-Aktuator an die Hilfsenergiequelle gelegt werden.

Für die Vorrichtung wird die Aufgabe erfindungsgemäß dadurch gelöst, daß ein unabhängig vom Lenkrad auf den Lenkmechanismus durch Speisung aus der Hilfsenergiequelle bei einer Freigabe einwirkender Lenk-Aktuator mit zwei zueinander entgegengesetzten Wirkungsrichtungen vorgesehen ist, daß je ein fremdkraftunterstützter Schalt-Aktuator für die Einlegung des ersten Vorwärtsgangs oder des Rückwärtsgangs vorgesehen sind, und daß die Energie der Hilfsenergiequelle für den Lenk-Aktuator und die Schalt-Aktuatoren durch eine Steuervorrichtung freigebbar sind, die den Lenk-Aktuator und die Schalt-Aktuatoren in Abhängigkeit von Eingangssignalen steuert, die von Gebern für den Schaltzustand des Schaltgetriebes, für die Fahrzeuggeschwindigkeit und ggf. der Stellung des Kupplungspedals sowie für Steuerbefehle zur Betätigung des Lenk-Aktuators und der Schalt-Aktuatoren erzeugbar sind, wobei die Geber für die Steuerung des Lenk-Aktuators und/oder der Schalt-Aktuatoren in Abhängigkeit von der Neigung eines zumindest in einer Ebene in zueinander entgegengesetzten Richtungen schwenkbar gelagerten, von Hand schwenkbaren Lenkhebels betätigbar sind, der unter einer Rückstellkraft steht, mit der er bei Wegfall der Handbetätigung in eine vorgegebene Ausgangslage gebracht und darin gehalten wird.

Damit wird eine Rangierhilfe geschaffen, die mit einem vergleichsweise geringen Aufwand unter Einsatz einer ohnedies vorhandenen Hilfsenergie auskommt, so daß eine kostengünstige Mehrfachausnutzung von Anlagenteilen möglich wird. Der Gegenstand der vorliegenden Erfindung tritt als eigenständiges Ganzes neben die klassischen Hilfen wie Servolenkungen und Automatikgetriebe und bietet eine erhebliche Bedienungserleichterung zum Rangieren des Fahrzeugs bei niedrigen Geschwindigkeiten, wie sie insbesondere bei Parklenkvorgängen auftreten. Äußerliches Hauptmerkmal der Erfindung im Kraftfahrzeug ist ein Mehrwege-Lenkhebel, der vom Fahrzeugführer mit dem Finger unter geringem Kraftaufwand in unterschiedliche Richtungen verbogen bzw. gedreht bzw. gedrückt werden kann, wobei jeweils einem definierten Raumrichtungsbereich eine definierte Steuersignalveränderung zugeordnet wird.

Bei einer bevorzugten Ausführungsform ist das Ausgangssignal des Gebers für die Fahrzeuggeschwindigkeit mit einem vorgebbaren Schwellenwert vergleichbar, bei dessen Unterschreitung eine erste Bedingung für die Freigabe des Lenk-Aktuators und der Schalt-Aktuatoren erfüllt ist. Das Vergleichssignal, das die Unterschreitung der Geschwindigkeitsschwelle angibt, kann als "Ermächtigungssignal" bezeichnet werden, das die oben beschriebene Hilfsfunktion im Fahrzeug vorbereitet. Zweckmäßigerweise wird dieser Betriebszustand der Vorrichtung z.B. durch die Bezeichnung "Hilfsfunktion möglich" im Fahrzeug angezeigt, vorteilhafterweise auf der Geschwindigkeitsanzeige.

Vorzugsweise gibt der Geber für das Kupplungspedal bei offener Kupplung ein Signal an die Steuervorrichtung aus, bei dessen Auftreten eine zweite Bedingung für die Freigabe des Lenk-Aktuators und der Schalt-Aktuatoren erfüllt ist. Dieses Signal kann als "Gangwechsel möglich" dem Fahrzeuglenker angezeigt werden. Es stellt ein zweites "Ermächtigungssignal" dar.

Günstig ist es, bei Abgabe eines Steuersignals durch einen ersten oder zweiten, bei Schwenkung des Lenkhebels betätigbaren Geber den Lenk-Aktuator über die Steuervorrichtung jeweils auf Rechts- oder Linkseinschlag der Räder mit Hilfsenergie zu beaufschlagen. Es ist aber auch möglich, bei Abgabe eines Steuersignals von dem ersten oder zweiten, bei Schwenkung des Lenkhebels betätigbaren Geber über die Steuervorrichtung jeweils den Schalt-Aktuator für die Einlegung des ersten Vorwärtsgangs oder des Rückwärtsgangs mit Hilfsenergie zu beaufschlagen.

Bei einer besonders zweckmäßigen Ausführungsform ist der Lenkhebel zumindest in zwei aufeinander senkrecht stehenden Ebenen je in zueinander entgegengesetzten Richtungen schwenkbar angeordnet, wobei in der ersten Ebene in zwei symmetrisch zur Ausgangslage verlaufenden Neigungen eines Bedienhebels des Lenkhebels je ein Geber für den einen und den anderen Schalt-Aktuator und in der zweiten Ebene in mindestens zwei symmetrisch zur Ausgangslage verlaufenden Neigungen jeweils ein Geber für den Rechtseinschlag bzw. Linkseinschlag der Räder betätigbar ist. Die Lenkhebelbetätigung korrespondiert also im jeweiligen Raumrichtungsbereich mit Geberbetätigungen.

Günstig ist es auch, die Steuervorrichtung bei Erfüllung der ersten und zweiten Bedingung durch ein Signal von einem Geber in Betriebsbereitschaft zu versetzen, das durch Drehung des Bedienungshebels um seine Längsachse erzeugbar ist. Dieses Signal ist ein drittes "Ermächtigungssignal", durch das die Hilfsfunktion des Rangierens aktiviert wird. Eine entsprechende Anzeige kann im Fahrzeug vorgesehen sein.

Es gibt somit drei Ermächtigungssignale:
- Hilfsfunktion aktivieren (vom Mehrwege-Lenkhebel)
- Hilfsfunktion möglich (vom Geschwindigkeitsmesser)
- Gangwechsel möglich (vom Kupplungspedal).

Die Hebelbewegung kann im jeweiligen Raumrichtungsbereich Kontaktumschaltungen hervorrufen oder analog arbeitende Geber z.B. Potentiometer o.ä. betätigen. Es sind auch Mischformen in bezug auf unterschiedliche Hebelrichtungen möglich und sinnvoll. Je nach der Anordnung der Geber sind beliebige Zuordnungen von Hebelrichtungen und zugeordneter Funktion möglich. Verallgemeinert werden folgende Klassen von Funktionen örtlich zentral über den Mehrwege-Lenkhebel ausgelöst:
- Lenkrichtungsveränderungen nach rechts und links
- Fahrtrichtungsveränderungen vor und zurück
- Ermächtigungssignale für die Steuervorrichtung, die sicherstellen, daß der Wille des Fahrers in jedem Fahraugenblick auch gewährleistet ist.

Gemäß einer noch weiteren vorteilhaften Ausführungsform des Erfindungsgedankens ist vorgesehen, daß der Lenkhebel einen ortsfest angeordneten Hebelschaft aufweist, der über eine Zugfeder mit dem Bedienhebel verbunden ist, daß seitlich neben der Zugfeder in gleichmäßigen Abständen Kontaktsegmente angeordnet sind, die bei Berührung mit der Zugfeder Stromkreise schließen, daß innerhalb des Bedienhebels und des Hebelschafts eine flexible Welle aus Isoliermaterial mit einem außerhalb des Bedienhebels angeordneten Knopf drehbar gelagert ist, und daß an dem zweiten Ende der Welle ein Vorsprung aus elektrisch leitendem Material angeordnet ist, dem eine neben dem Ende angeordnete Kontaktfahne zugeordnet ist, die bei Berührung mit dem Vorsprung einen Stromkreis schließt. Ein derartiger Lenkhebel kann zweckmäßigerweise hinter dem Lenkrad angebracht sein. Es ist auch möglich, den Lenkhebel nach Art eines Gangschaltknüppels an einer leicht zugänglichen Stelle im Cockpit eines Fahrzeugs anzuordnen. Von Vorteil ist es, wenn der Hebel einer Gangschaltung zugleich die Funktion des Lenkhebels in einer hierfür geeigneten Lage, insbesondere in Leerlaufstellung, übernimmt, wofür ein separates Aktivierungssignal für die Steuervorrichtung zweckmäßig ist. Bei einem Fahrzeug mit einem Automatikgetriebe kann der Hebel des Getriebes zugleich die Funktion des Lenkhebels übernehmen, insbesondere in Nullstellung, wobei ebenfalls ein separates Aktivierungssignal zweckmäßig ist.

Ausgehend von einem Mehrwege-Lenkhebel der oben beschriebenen Art gibt es demnach fünf Steuersignale: Linksrichtung, Rechtsrichtung, Vorwärtsrichtung, Rückwärtsrichtung, Neutralstellung (kein Richtungssignal).

Daneben gibt es drei Rückmeldesignale, ausgehend von Gebern im Schaltgetriebe: Vorwärtsgang eingelegt, Rückwärtsgang eingelegt, kein Gang eingelegt.

Vorzugsweise ist der an der Lenksäule eines Fahrzeugs befestigte Hebel für die Blinkerbetätigung zugleich der Lenkhebel für die Erzeugung der Steuersignale für die Steuervorrichtung. Der in jedem Kraftfahrzeug vorhandene Hebel für die Blinkerbetätigung wird bei dieser Ausführungsform mehrfach ausgenutzt, so daß kein gesonderter Hebel für die Rangierfunktion mehr benötigt wird.

Es ist zweckmäßig, die Geber für die Erzeugung der Steuersignale für die Rangierbewegung in der gleichen Bewegungsebene wie die Geber für die Richtungsanzeige anzuordnen und bei einem größeren Neigungswinkel des Lenkhebels gegen die Ausgangslage zu betätigen als die Geber für die Richtungsanzeige. Mit dem Lenkhebel können daher neben den vier Steuersignalen für die Aktuator-Betätigung: Linkseinschlag (an Lenkverstellung), Rechtseinschlag (an Lenkverstellung), Vorwärtsgang einlegen (an Schaltgetriebe), Rückwärtsgang einlegen (an Schaltgetriebe), die Steuersignale für die Richtungsanzeige erzeugt werden. Als Hilfsenergie kann eine Stromquelle verwendet werden, während der Lenk-Aktuator und die Schalt-Aktuatoren elektrodynamisch arbeitende Stellelemente sind.

Es ist auch möglich, als Hilfsenergiequelle einen Druckbehälter vorzusehen, wobei der Lenk-Aktuator und die Schalt-Aktuatoren doppelt wirkende Differentialzylinder mit in zueinander entgegengesetzten Richtungen verschiebbaren Kolben aufweisen, und wobei die Druckbeaufschlagung der Arbeitskammern der Differentialzylinder über Ventile steuerbar ist. Bei einer anderen bevorzugten Ausführungsform ist vorgesehen, daß die beiden Arbeitskammern des Differentialzylinders des Lenk-Aktuators je über ein Ventil mit einem Hydrospeicher und je über ein Ventil mit einem Flüssigkeitssammelbehälter verbunden sind, daß der Kolben des Differentialzylinders über Kolbenstangen mit dem Lenkmechanismus verbunden ist, und daß die Ventile Magnetventile sind, deren Spulen an die Steuervorrichtung angeschlossen sind. Bei einer anderen günstigen Ausführungsform ist vorgesehen, daß die Schaltmuffen für den ersten Vorwärtsgang und den Rückwärtsgang des Schaltgetriebes jeweils über ein Gestänge und eine Kolbenstange mit den Kolben der Differentialzylinder verbunden sind, daß die beiden Arbeitskammern jedes Differentialzylinders für zueinander entgegengesetzte Kolbenbewegungen gemeinsam an ein erstes Magnetventil angeschlossen sind, daß die beiden anderen Arbeitskammern jeweils sowohl mit einem zweiten als auch mit einem dritten Magnetventil verbunden sind, daß die zweiten Magnetventile mit dem ersten Magnetventil, das eingangsseitig an den Hydrospeicher angeschlossen ist, und die dritten Magnetventile mit dem Flüssigkeitssammelbehälter verbunden sind, daß Geber für die Stellungen der Gestänge vorgesehen sind, und daß die Geber und die Spulen der Magnetventile an die Steuervorrichtung angeschlossen sind.

Prinzipiell sind für die Rangierfunktion folgende Baugruppen erforderlich:
Eine Steuervorrichtung, die mit den Signalen der Geber des Lenkhebels und einigen zusätzlichen Maschinen bzw. Fahrzustandssignalen eine logische Verknüpfung ausführt und daraus Steuersignale für die Aktuatoren generiert. Hierfür wird vorzugsweise ein Mikrorehner verwendet.

Ein Aktuator zur fremdkraftunterstützten Richtungsveränderung.

Je ein Aktuator zur fremdkraftunterstützten Betätigung des Schaltgetriebes im Hinblick auf die Beschränkung der ausreichenden Notwendigkeit des ersten Vorwärtsgangs und eines Rückwärtsgangs.

Es sei darauf hingewiesen, daß es sich erfindungsgemäß um ein modifiziertes, gewöhnliches Schaltgetriebe handeln kann, nicht primär um ein Automatikgetriebe, obwohl die Erfindung leicht auch auf derartige Getriebe angewendet werden kann.

Die beschriebene Vorrichtung arbeitet wie folgt: Mit Unterschreiten eines Tempolimits erscheint das Signal "Hilfsfunktion möglich" am Ausgang eines Geschwindigkeitsmessers. Dieses Ermächtigungssignal wird der Steuervorrichtung zugeführt. Durch Betätigung des Lenkhebels muß der Benutzer zunächst die Parklenkhilfsfunktion zuschalten. Die Steuervorrichtung erkennt den Fahrerwillen an dem damit verbundenen Aufscheinen des Signals "Hilfsfunktion aktivieren". Die logische Verknüpfung ist so ausgeführt, daß ein Aktivieren erst möglich wird, wenn das Tempolimit unterschritten wird und ein Passivieren automatisch erfolgt, wenn das Limit ca. 0,5 sec. überschritten wird. Innerhalb des Limitbereichs kann der Benutzter beliebig oft über den Lenkhebel willentlich aktivieren oder passivieren.

Ist die Hilfsfunktion aktiviert, kann sofort über richtungsabhängiges Betätigen des Kontakthebels mit Hilfskraftunterstützung gelenkt werden.

Die hilfskraftgesteuerte Gangumschaltung ist unter folgenden Bedingungen möglich:
- Das Kupplungspedal muß betätigt sein
- Das Schaltgetriebe muß zuvor in seine definierte Stellung gebracht sein (Leergang oder erster Gang oder Rückwärtsgang).

Der Lenkhebel wird räumlich im Fahrzeug so angeordnet, daß die Hebelstellungen für die Richtungen links, rechts, vorwärts, rückwärts mit den vom Fahrer erwarteten Bewegungsreaktionen des Fahrzeugs übereinstimmen, bzw. in möglichst naher Analogie zu den gewohnten Lenk- und Schaltbewegungen stehen.

Der Lenkhebel ist so ausgebildet, daß ein Loslassen das selbsttätige Rückschnellen in die neutrale Stellung bewirkt. Unter dieser Maßgabe wird er zur Links/Rechtsbewegung in die gewünschte Richtung gedrückt und für die Dauer der Hilfskraftunterstützung gehalten. Zur Richtungsveränderung (Gangumschaltung) wird der Hebel nur kurz in die gewünschte Richtung (also nach vorn oder hinten) angetippt; es ist dann nicht erforderlich, den Hebel in dieser Stellung zu halten.

Zur Aktivierung der Hilfsfunktion über den Lenkhebel wird aus Sicherheitsgründen eine "ungewöhnliche" Lenkhebelbewegung zugeordnet, eine Torsionsbewegung, die nicht durch bloßes unachtsames Berühren herbeigeführt werden kann. Im übrigen wird diese Torsionsumschaltung in vorteilhafter Weise (in Analogie zum Tip-Kontakt) durch kurzes Verdrehen und Rückschnellen lassen realisiert.

Die vorzugsweise als elektrische Schaltungsanordnung ausgebildete Steuervorrichtung übernimmt folgende Unteraufgaben:

Koinzidenzunterdrückung gegenläufiger Signale im Fehlerfall (z.B. links/rechts zugleich etc.).

Organisation der Rangfolge der Steuersignale.

Kontaktentprellen, allgemeine Signalaufbereitung.

Alle diese Aufgaben werden mit elementaren elektronischen Mitteln wie Gatterbausteinen, Datenselektoren, Zeitverzögerungsgliedern, Speicherbausteinen oder mit einem Mikrorechner realisiert.

Als Hilfsenergiequelle wird vorzugsweise der Hydrospeicher einer Bremsschlupfregeleinrichtung verwendet.

Die Erfindung unterscheidet sich in folgenden Punkten vom bekannten Stand der Technik:

Austausch der Handkraftlenkung über ein Lenkrad gegen eine handhebelgesteuerte, fremdkraftunterstützte Hilfslenkung und zugleich

Austausch der Handgangschaltung des ersten Gangs sowie des Rückwärtsgangs gegen eine handhebelgesteuerte, fremdkraftunterstützte Getriebeumschaltung,

wobei das Getriebe nicht ein herkömmliches Automatikgetriebe sein muß, sondern ein lediglich erweitertes normales Kraftfahrzeug-Schaltgetriebe sein kann und zugleich

die zuvor aufgeführten Hilfsfunktionen von einem einzigen Hebel aus vorgenommen werden und

dies unter Maßgabe von Geschwindigkeitsbegrenzungen sowohl für die (Hilfs-)Lenk- als auch die Gangschaltfunktion und zugleich als Anwendungsfall für den Kraftfahrzeugbereich und zugleich unter Einsatz einer Hilfsenergiequelle, die nur einen Bruchteil der Energie einer üblichen Servolenkungspumpe bereitstellen muß.

Weitere vorteilhafte Ausgestaltungen der Erfindung sind in den Unteransprüchen beschrieben.

Die Erfindung wird nachfolgend anhand von Ausführungsbeispielen näher erläutert, die in der Zeichnung dargestellt sind.

Es zeigen:

Fig. 1    eine schematische Darstellung einer erfindungsgemäßen Vorrichtung zum Rangieren eines Fahrzeugs,

Fig. 2    eine perspektivische Ansicht eines bei der Vorrichtung gemäß Fig. 1 eingesetzten Lenkhebels,

Fig. 3    eine schematische Darstellung eines Lenk-Aktuators, der bei der Vorrichtung gemäß Fig. 1 eingesetzt ist,

Fig. 4    ein Kupplungspedal mit einem Geber,

Fig. 5    ein Schaltgetriebe mit Schalt-Aktuatoren für eine Vorrichtung gemäß Fig. 1 und

Fig. 6    eine perspektivische Ansicht eines Teils einer anderen Ausführungsform eines Lenkhebels.

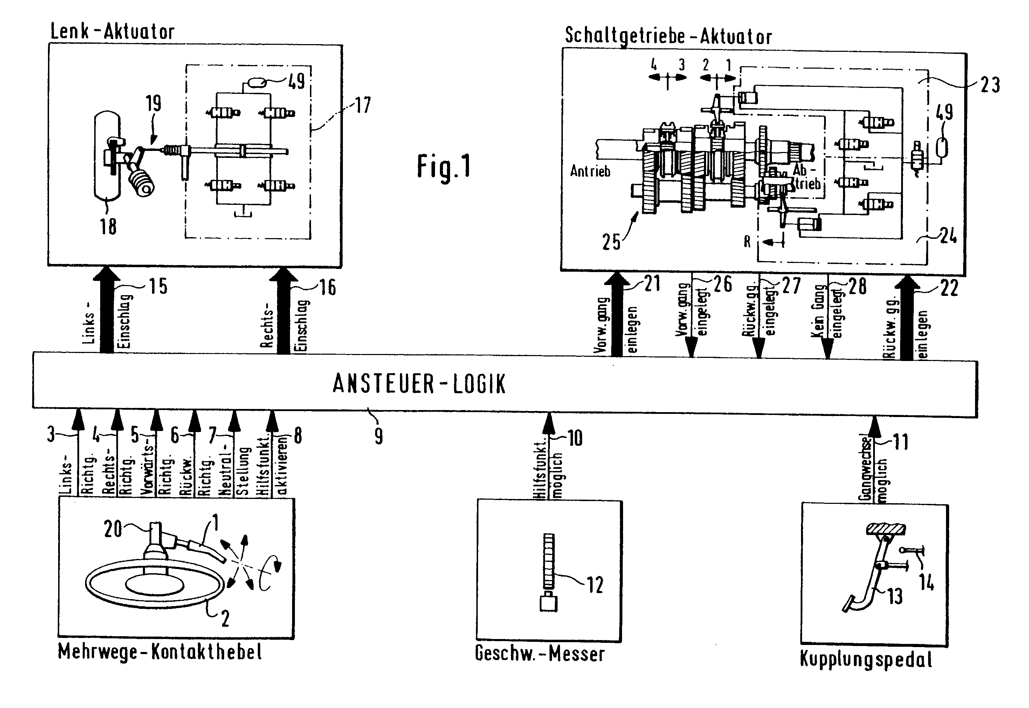

Die Vorrichtung zum Rangieren eines nicht näher dargestellten Fahrzeugs enthält einen Lenkhebel 1, der für eine Mehrwege-Verschiebung ausgebildet ist. Der Lenkhebel 1 ist unter einem Lenkrad 2 angebracht. Die in Fig. 1 dargestellte Position ist aus Gründen der Anschaulichkeit gewählt. Die Anbringung im Fahrzeug wird nach ergonomischen Gesichtspunkten vorgenommen.

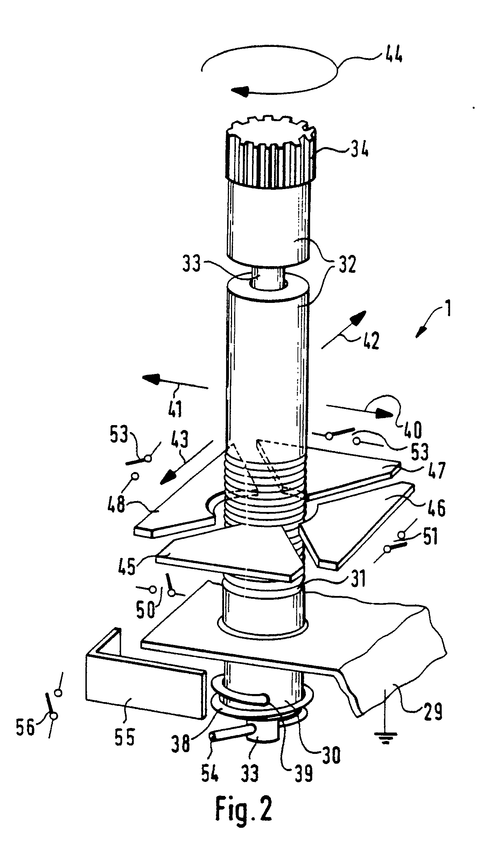

Verschiedenen Hebelbewegungsrichtungen sind verschiedene Steuersignale zugeordnet, die von neben dem Lenkhebel 1 angeordneten Gebern, die in Verbindung mit Fig. 2 noch eingehend erläutert werden, erzeugt werden. Die Zuordnung der Bewegungsrichtungen ist so getroffen, daß der Lenkeinschlagwinkel analog der Lenkraddrehrichtung erfolgt und bei Gangumschaltung "vorwärts" der Hebel in Richtung Frontscheibe gedrückt wird, bei Gangumschaltung "rückwärts" in Richtung Fahrer gezogen wird. Zum Aktivieren der Hilfsfunktion wird der Hebel nach vorn verdreht und losgelassen. Er schnellt dann in seine Ausgangslage zurück.

Von den in Fig. 1 nicht dargestellten Gebern am Lenkhebel 1 werden je nach der Schwenkrichtung und der Neigung des Lenkhebels sechs Signale auf Kanälen 3, 4, 5, 6, 7, 8 erzeugt. Den sechs Signalen sind folgende Steuerbefehle zugeordnet: Lenkeinschlag in Linksrichtung, Lenkeinschlag in Rechtsrichtung, erster Gang in Vorwärtsrichtung einlegen, Gang in Rückwärtsrichtung einlegen, Gang in Neutralstellung, Hilfsfunktion aktivieren. Die Kanäle 3 bis 8 sind an einer Steuervorrichtung 9 angeschlossen, die als Ansteuer-Logik für die unten noch näher erläuterten Teile des Kraftfahrzeugs ausgebildet ist. Neben den Kanälen 3 bis 8 sind zwei weitere Kanäle 10, 11 an die Steuervorrichtung 9 angeschlossen. Der Kanal 10 ist mit einem Geber 12 für die Fahrzeuggeschwindigkeit, also einem Geschwindigkeitsmesser, verbunden. Der Kanal 11 ist mit einem Geber 14 am Kupplungspedal 13 verbunden. Wenn das Kupplungspedal 13 betätigt wird, wird der Geber 14, ein Schaltkontakt, geschlossen. Der geschlossene Schaltkontakt des Gebers 14 zeigt damit an, daß die Kupplung offen ist.

Die Steuervorrichtung 9 ist ausgangsseitig über zwei Kanäle 15, 16 an weiter unten ausführlicher beschriebener Magnetventile in einem Lenk-Aktuator 17 angeschlossen, der mit dem Lenkmechanismus 19 der Räder 18 verbunden ist. Dieser Lenkmechanismus 19 weist eine nicht näher beschriebene Verbindung mit der Lenksäule 20 des Lenkrads 2 auf. Über weitere Kanäle 21, 22 ist die Steuervorrichtung 9 mit Magnetventilen zweier Schalt-Aktuatoren 23, 24 verbunden, mit denen jeweils der erste Vorwärtsgang oder der Rückwärtsgang eines Schaltgetriebes 25 einlegbar sind. Im Schaltgetriebe 25 sind jeweils unten näher beschriebene Geber vorhanden, die ein Signal erzeugen, wenn der erste Vorwärtsgang oder der Rückwärtsgang oder kein Gang des Schaltgetriebes 25 eingelegt sind. Diese Geber sind über Leitungen 26, 27, 28 mit der Steuervorrichtung 9 verbunden. Bei den Gebern handelt es sich vorzugsweise um Schaltkontakte, es können jedoch auch kontaktlose Geber verwendet werden.

Im Fahrzeug ist ein Hydrospeicher 49 als Hilfsenergiequelle vorgesehen. Aus dem Hydrospeicher 49, der vorzugsweise zu einer im Fahrzeug vorhandenen Bremsschlupfregeleinrichtung gehört, werden der Lenk-Aktuator 17 und die Schalt-Aktuatoren 23, 24 mit Energie über die vorgeschalteten Magnetventile versorgt.

Die Fig. 2 zeigt das Konstruktionsprinzip des Lenkhebels 1, der als Mehrwege-Kontakthebel ausgebildet ist. Hierbei sind alle stützenden Formteile weggelassen, um das Wesentliche besser zeigen zu können.

In einem ortsfesten metallischen Grundkörper 29 steckt ein ebenfalls metallischer Hebelschaft 30, der mit dem Grundkörper 29 mechanisch fest, elektrisch leitend verbunden ist.

Der als Hohlzylinder ausgebildete Hebelschaft 30 ist mechanisch fest, elektrisch leitend mit einer metallischen Zugfeder 31 verbunden, bei der es sich um eine Spiralfeder handelt. Günstige Maße für die Zugfeder 31 sind: Außendurchmesser ca. 10 mm; Federdrahtdurchmesser ca. 1,3 mm; Oberfläche verchromt. In dieser Zugfeder 31 steckt mechanisch fest ein Bedienhebel 32, ein Rohr aus elektrisch isolierendem Material. Durch den Bedienhebel 32, die Zugfeder 31 und den Hebelschaft 30 ist eine flexible Welle 33 aus isolierendem Material geführt, die durch einen Knopf 34 gegen den Widerstand einer Torsionsfeder 38 verdreht werden kann. Die Torsionsfeder 38 ist in eine Bohrung 39 des Hebelschafts 30 mechanisch fest, elektrisch leitend eingelassen. Der Bedienhebel 32 kann durch Verbiegen der Zugfeder 31 in Richtungen, die mit 40, 41, 42, 43 bezeichnet sind, und durch Verdrehen des Knopfes 34 in eine mit 44 bezeichnete Richtung bewegt werden. Die Zugfeder 31 ist von elektrisch leitenden Kontaktsegmenten 45, 46, 47, 48, die sich gegenseitig und die Zugfeder 31 nicht berühren, umgeben. Diese Kontaktsegmente 45 bis 48 sind über Isolationsmaterial mit dem Grundkörper 29 fest verbunden. Die Verbindungsteile sind aus Gründen der Übersichtlichkeit nicht dargestellt. Die Kontaktsegmente 45 bis 48 sind in gleichmäßigen Abständen voneinander längs des Umfangs der Zugfeder 31 angeordnet, die mit jedem der Kontaktsegmente 45 bis 48 einen Geber bildet, der symbolisch neben dem jeweiligen Kontaktsegment 45 bis 48 dargestellt und mit 50, 51, 52, 53 bezeichnet ist.

Bei Bewegen des Bedienhebels 32 in die Richtungen 40, 41, 42, 43, legt sich die Zugfeder 31 an die Kontaktsegmente 45, 46, 47, 48 an. Hierdurch werden jeweils Schaltkontakte der Geber 50, 51, 52 und 53 geschlossen. Durch das Schließen der Schaltkontakte gelangt eine Spannung, z.B. die Spannung des einen Pols der Gleichspannungsquelle des Fahrzeugs, als Eingangssignal zur Steuervorrichtung 9. Die Zugfeder 31 stellt den Bedienhebel 32 beim Loslassen selbsttätig in die Ausgangslage zurück. Die Hebelmasse und die durch die flexible Welle erzeugte Reibung sind vorzugsweise so aufeinander und auf die Zugfederkonstante abgestimmt, daß beim Zurückfedern kein Überschwingen in entgegengesetzte Kontaktrichtung auftritt. Es wird also ein Zustand annähernd aperiodischer Dämpfung realisiert, der bewirkt, daß der Bedienhebel 32 beliebig weit verbogen werden kann, ohne daß beim Freigeben ein Überschwingen in die andere Kontaktzonen auftritt. Damit wird ein Prellen zwischen zueinander antivalenten Funktionen (links/rechts) vermieden. Diese Maßnahme wird zusätzlich elektronisch durch die üblichen Kontakt-Entprellschaltungen mit Seitengliedern unterstützt.

Beim Verdrehen des Knopfes 34 in Richtung 44 legt sich ein Ausläufer 54 der Torsionsfeder 38 an eine Kontaktfahne 55 an, die in nicht dargestellter Weise ebenfalls über Isolationsmaterial fest mit dem Grundkörper 29 verbunden ist. Der Grundkörper 29 ist mit dem Minuspol der Autobatterie ("Masse") verbunden, gleichzeitig mit dem gemeinsamen Rückleiter der Steuervorrichtung 9 (Digital-Ground), dessen Potential dem Binärwert L (im Gegensatz zu logisch H) zugeordnet ist. Bei einem Bewegen und Verdrehen kann also wahlweise den Kontaktsegmenten 45 bis 48 und bzw. der Kontaktfahne 55 ein L-Signal zugeführt werden. Die Kontaktsegmente und Kontaktfahnen sind mit der Steuervorrichtung 9 verbunden. Es besteht die Möglichkeit Bewegungen auszuführen, mit denen zwei Kontaktsegmente zugleich ein L-Signal erhalten. Ist dies unerwünscht, kann durch Koinzidenzunterdrückung in der Steuervorrichtung 9 Abhilfe geschaffen werden. Vorgesehen, hier jedoch nicht dargestellt, ist eine Führungskulisse für die Zugfeder 31 aus isolierendem Material, die nur jeweils eine einzige Bewegungsrichtung zuläßt.

Der Ausläufer 54 bildet mit der Kontaktfahne 55 einen Schaltkontakt eines Gebers, der neben der Kontaktfahne 55 symbolisch dargestellt und mit 56 bezeichnet ist.

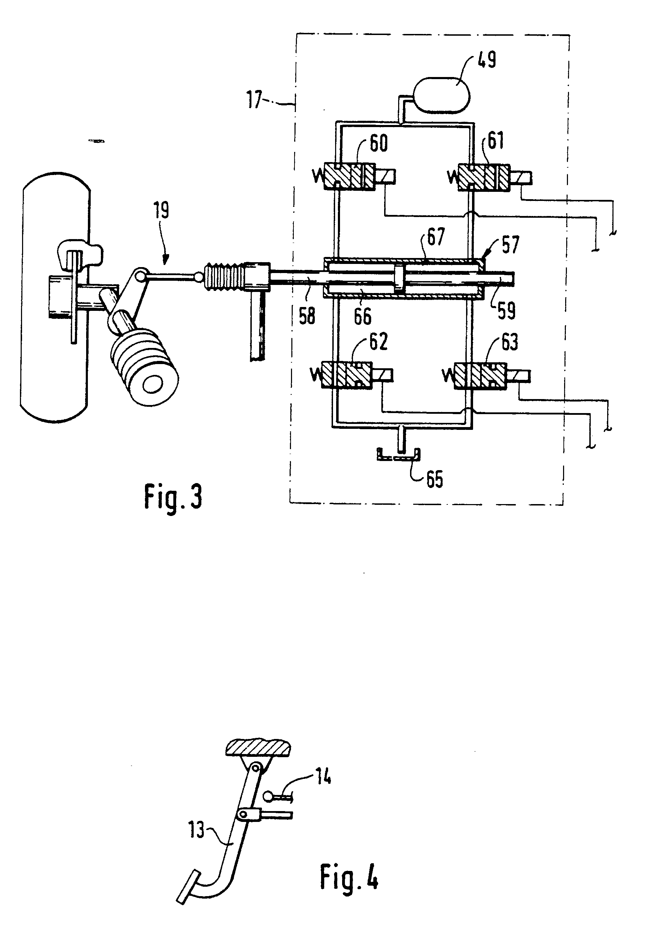

Fig. 3 zeigt den prinzipiellen Aufbau des Lenk-Aktuators 17. Der Hydrospeicher 49 der Bremsschlupfregeleinrichtung leifert die Hilfsenergie zur Betätigung eines doppelt wirkenden Differentialzylinders 57 mit zwei Kraftrichtungen und gleichen Kolbenflächen. Zwei Kolbenstangen 58, 59 sind in Wirkrichtung der Kraft des Spurstangenhebels des Lenkmechanismus 19 justiert, um Biegemomente zu vermeiden. Zur hilfskraftunterstützten Lenkung sind Kombinationen von Ventilen 60, 61 oder für die andere Richtung 62, 63 von der Steuervorrichtung 9 zu aktivieren. Vorzugsweise werden 2/2-Magnetventile 60 bis 63 verwendet, wie sie auch in der Bremsschlupfregeleinrichtung verwendet werden.

Die Ventile 60, 61 sind je mit einer Arbeitskammer 66, 67 des Differentialzylinders 57 und mit dem Hydrospeicher 49 verbunden. Die Ventile 62, 63 sind je mit der Arbeitskammer 66, 67 und mit einem Flüssigkeitssammelbehälter 65 verbunden. Die Spulen der Ventile 60 bis 63 sind über nicht näher bezeichnete Leitungen des Kanals 21 mit der Steuervorrichtung 9 verbunden. Die Ventile 60, 63 sind bei der in Fig. 3 gezeigten Anordnung geöffnet, wenn der Kolben des Differentialzylinders 57 nach rechts bewegt wird, während die Ventile 61, 62 geschlossen sind. Wird der Kolben nach links bewegt, dann sind die Ventile 61, 62 geöffnet, während die Ventile 60, 63 geschlossen sind. Entsprechende Steuersignale werden von der Steuervorrichtung 9 an die Spulen der Ventile 60 bis 63 ausgegeben.

Fig. 4 zeigt noch einmal das Kupplungspedal 13 und den zugehörigen Geber 14 für das Signal "Gangwechsel möglich" auf der Leitung 11 in Fig. 1. Bei Betätigung des Kupplungspedals wird zugleich ein Schaltkontakt gegen "Masse" geschlossen und damit ein L-Signal an die Steuervorrichtung 9 gesendet.

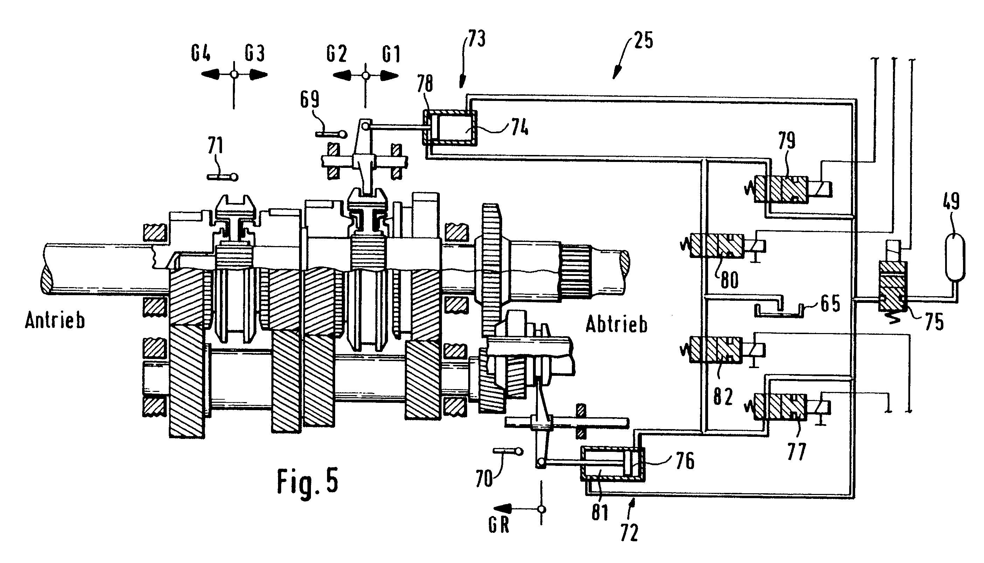

Fig. 5 zeigt ein erfindungsgemäß modifiziertes Schaltgetriebe 25. Die Stellung der Schaltmuffen für die verschiedenen Gänge sind durch Richtungspfeile mit der Benennung G1, G2, G3, G4, GR gekennzeichnet. Symbolisch angedeutet sind Geber 69, 70, 71 zur Rückmeldung der Muffenstellungen, aus denen die in Fig. 1 dargestellten Rückmeldesignale vom Aktuator an die Steuervorrichtung 9 gebildet werden. Es handelt sich hierbei vorzugsweise um Endkontakte (Endschalter), die mechanisch von mehreren Seiten über Kniehebel etc. angelenkt werden können und in der Endstellung der Schaltmuffe eine Kontaktgabe nach Masse bewirken. Die so erzeugten L-Signale werden von der Steuervorrichtung 9 zur Erkennung des Getriebeschaltzustands ausgewertet. Wie der Fig. 5 zu entnehmen ist, wird die Getriebeumschaltung durch Verrücken der zugehörigen Schaltmuffen über die doppelt wirkenden Differentialzylinder 72 und 73 vorgenommen. Diese Art der Fremdkraftüberlagerung ist mit dem Handschaltmechanismus kompatibel. Der Hydrospeicher 49 der Bremsschlupfregeleinrichtung liefert auch hier die erforderliche Hilfsenergie. Der Differentialzylinder 73 ist mit einer Arbeitskammer 74 an ein Magnetventil 75 angeschlossen, das in der Leitung zum Hydrospeicher 49 angeordnet ist. Der Differentialzylinder 72 ist mit einer Arbeitskammer 76 über ein Magnetventil 77 an das Magnetventil 75 angeschlossen. Die andere Arbeitskammer 78 des Differentialzylinders 73 ist einerseits über ein Magnetventil 79 mit dem Magnetventil 75 und andererseits über ein Magnetventil 80 mit dem Flüssigkeitssammelbehälter 65 verbunden. Die zweite Arbeitskammer 81 des Differentialzylinders 72 ist unmittelbar mit dem Magnetventil 75 verbunden. Zwischen dem Flüssigkeitssammelbehälter 65 und dem Arbeitszylinder 76 ist ein weiteres Magnetventil 82 angeordnet. Die Spulen der Magnetventile 75, 77, 80, 82 sind über nicht näher bezeichnete Leitungen an die Steuervorrichtung 9 angeschlossen. Diese Leitungen gehören zum Kanal 22 in Fig. 1.

Die Steuervorrichtung 9 liefert Schaltsignale zur Betätigung der 2/2-Ventile 75, 77, 79, 80, 81. Es handelt sich auch hier vorzugsweise um den gleichen Ventiltyp, wie er in Bremsschlupfregeleinrichtungen verwendet wird. Die Ventile 79, 80 sind hierbei dem Zylinder 73 und die Ventile 77, 82 dem Zylinder 72 zugeordnet. Mit dem Magnetventil 75 wird bei allen Betätigungen die Hilfsenergie zugeschaltet. Bei den Kolben der Differentialzylinder 72, 73 handelt es sich um unsymmetrische Differentialkolben mit zwei Kraftrichtungen und einem Flächenverhältnis von ca. 2 zwischen Kolbenseite und Stangenseite. Die Betätigung der beiden Kolben erfolgt über die Steuervorrichtung 9 zeitseriell; dann ist der Wirkablauf in bezug auf die zugeordneten Ventile umkehrbar und soll hier nur am Beispiel für den Kolben des Differentialzylinders 73 beschrieben werden (für den Kolben des Differentialzylinders 72 ergeben sich spiegelbildliche Verhältnisse). Mit dem Magnetventil 75 werden zugleich die Magnetventile 77, 82 aktiviert, um den Differentialzylinder 72 zu blockieren. Wird dann das Magnetventil 79 aktiviert, bewegt sich die Kolbenstange heraus. Wird das Magnetventil 80 aktiviert, bewegt sich die Kolbenstange wieder herein. Mit Rückmeldung über den Geber 69 werden alle Magnetventile 75, 77, 79, 80, 82 abgeschaltet, der erste Gang ist herein- oder herausgefahren.

Als Geschwindigkeitssensor dient ein weichmagnetisches Polrad, das an der Kardanwelle befestigt ist und auf ein magnetisches Mikrofon wirkt. Die Höhe der entstehenden Dynamospannung wird als Maß für das Über- oder Unterschreiten einer Temposchwelle wie folgt aufgearbeitet:

Die entstehende Wechselspannung wird aktiv gleichgerichtet, d.h. das Signal wird zugleich leistungsverstärkt. Nach Oberwellenglättung über einen Teilpaß steht eine geschwindigkeitsabhängige Gleichspannung zur Verfügung, die in einem Spannungskomperator mit einem Sollwert verglichen wird. Das Ausgangssignal dieses Komperators hat dann den gewünschten digitalen Charakter und wird der Steuervorrichtung 9 zugeführt.

Die Funktionen der Steuervorrichtung 9 werden vorzugsweise von einer von der Bremsschlupfregeleinrichtung unabhängigen Elektronik durchgeführt. Es ist jedoch ebenso im Sinne der Erfindung, daß die logischen Überwachungsfunktionen von der Bremsschlupfregel-Elektronik mit übernommen werden.

Der Lenkhebel 1 kann eine reduzierte Kontaktzahl, z.B. nur die Kontaktsegmente 45 und 47 für die Geber 50, 52 enthalten, wenn mit dem Lenkhebel 1 nur eine Lenkhilfe ausgeführt werden soll. Es ist auch möglich, einen Lenkhebel 1 mit reduzierter Kontaktzahl nur für die Betätigung des ersten Vorwärtsgangs und des Rückwärtsgangs zu verwenden. In den obengenannten Fällen sind jeweils die Gänge bzw. die Lenkung auf eine andere Art, z.B. mit gesonderten Betätigungsorganen oder auch auf die übliche Art, zu betätigen. Die Steuervorrichtung 9 enthält vorzugsweise Speicher für die Gebersignale, die dem ersten Vorwärtsgang und dem Rückwärtsgang zugeordnet sind. Für die Steuerung der Gänge reicht es dann aus, den Lenkhebel 1 "anzutippen", d.h. die zugeordneten Geber, z. B. 51 und 53, kurz mit der Auslenkung des Lenkhebels 1 aus seiner in Fig. 1 dargestellten Ruhelage zu schließen, und dann den Lenkhebel 1 loszulassen.

Die Lenkhilfe wird vorzugsweise durch Dauerkontaktgeber, z.B. die Geber 50, 52 des Lenkhebels in Betrieb genommen, d.h. der Bedienhebel 32 muß zur Betätigung der Radverstellung ständig mit der Hand ausgelenkt werden.

Statt eines von Hand schaltbaren Getriebes kann auch ein Automatikgetriebe verwendet werden, wobei mittels des Lenkhebels 1 der Rückwärtsgang und ein Vorwärtsgang eingelegt werden können.

Statt der als Schaltkontakte ausgebildeten Geber 50 bis 53 können auch kontaktlos arbeitende, digitale Geber oder auch Analoggeber, z.B. Potentiometer, verwendet werden. Auch bei diesen ist für die selbsttätige Zurückstellung des Bedienhebels 32 eine Feder vorhanden. Auch eine gemischte Anordnung von Kontaktgebern und Analoggebern ist möglich.

Die Hilfsfunktion für das Rangieren muß von einer Person vor oder nach dem Unterschreiten eines Tempolimits zugeschaltet werden, wird also nur nach dem Unterschreiten des Tempolimits wirksam, auch wenn sie vorher eingeschaltet wurde. Die Hilfsfunktion für das Rangieren wird dann automatisch außer Kraft gesetzt, wenn das Tempolimit für eine vorgebbare Zeit überschritten wird. Damit wird eine gewisse Hysterese erzielt.

Außer der in Fig. 1 dargestellten Anordnung gibt es noch weitere Anbringungsmöglichkeiten für den Lenkhebel 1. Der Lenkhebel 1 kann senkrecht nach Art eines senkrechten Gangschaltungsknüppels an günstiger Stelle im Cockpit angeordnet sein. Es ist auch möglich, daß der Hebel einer Handgangschaltung gleichzeitig die Funktion des Lenkhebels 1 übernimmt (z.B. in Leergangstellung bei separatem Aktivierungssignal).

Der Hebel eines Automtikgetriebes kann gleichzeitig die Funktion des Lenkhebels 1 übernehmen (z.B. in N-Stellung bei separatem Aktivierungssignal). Die Steuervorrichtung 9 kann auch von einer im Kraftfahrzeug bereits vorhandenen elektronischen Steuereinrichtung mit übernommen werden. Als Steuervorrichtung 9 kann vorzugsweise ein Mikrorechner eingesetzt werden, der eine Eingabe/Ausgabeschaltung aufweist, die mit den Gebern und den Spulen der in den Fig. 1 bis 5 dargestellten Vorrichtung verbunden ist.

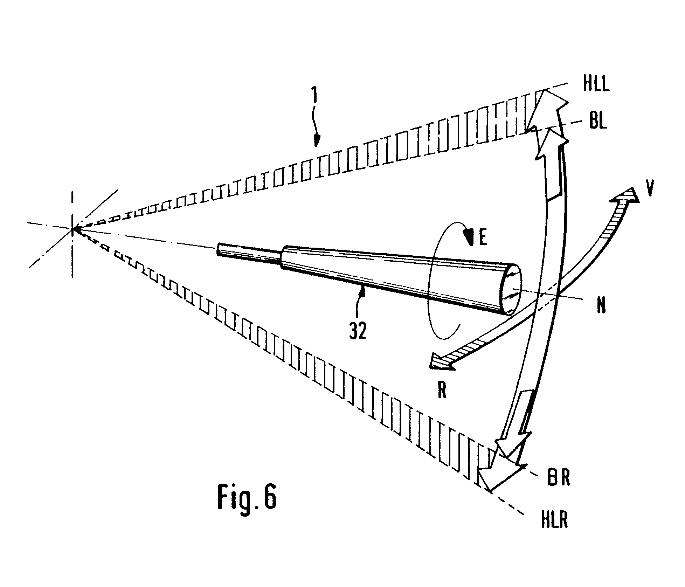

Besonders günstig ist die in Fig. 6 gezeigte Ausführungsform eines Lenkhebels 1. Der nur zum Teil dargestellte Lenkhebel ist so ausgebildet, daß er neben den oben beschriebenen Funktionen zusätzlich noch die Funktion des Blinkerschalters zur Richtungsanzeige übernimmt. Anhand der Fig. 6 wird nachfolgend die Funktion des Lenkhebels beschrieben:

Im Normalfall wird der Lenkhebel 1 in der neutralen, mit N bezeichneten Stellung stehen, wenn der Fahrer geradeaus fährt, wie bei jedem Blinkerhebel auch. Bewegt er sich mit einer Geschwindigkeit oberhalb des Tempolimits für den Parklenk-Hilfsvorang, so ist die Hilfsfunktion passiviert und nur der Blinkerschalter aktiv. In der Darstellung ist dies durch den Bereich, der mit BL-BR bezeichnet. Natürlich könnte der Fahrer auch die anderen Hebelbewegungen ausführen, jedoch hat dies keine Wirkung. Unterschreitet die Fahrzeuggeschwindigkeit das Tempolimit, so kann der Fahrer mit der Drehbewegungsrichtung E die Hilfsfunktionen aktivieren. Damit stehen ihm die Möglichkeiten der Gangumschaltung offen, die hier durch die Bewegungsrichtungen V und R gekennzeichnet sind, aber auch die Lenkbewegung mit Fremdkraft. Erfindungsgemäß ist nun die zugehörige Hebelrichtung in Übereinstimmung mit der Blinkereinschaltrichtung gebracht. Mit Betätigung schaltet der Fahrer also automatisch ordnungsgemäß zunächst den Blinker in eine Stellung im Bereich BL oder BR und durch Weiterbewegen in eine Stellung HLL oder HLR. Als Beispiel soll nun nur die Richtung BL/HLL näher beschrieben werden. Das erfindungsgemäße Zurückschnellen des Mehrwege-Lenkhebels findet jetzt von HLL auf BL statt von V oder R auf N. Das heißt, immer wenn der Fahrer den Bedienhebel 32 auf HLL drückt, wird das Lenkrad 2 nach links drehen und zugleich der Blinker tätig sein. Läßt er den Bedienhebel 32 los, wird dieser auf BL zurückschnellen und die Lenkraddrehung aufhören, jedoch weiterhin der Blinker tätig sein. Wechselt der Fahrer die Lenkrichtung, betätigt er zunächst wiederum den Blinker. Beschleunigt der Fahrer aus der Ausparksituation heraus in eine Kurve, so unterdrückt die Steuervorrichtung 9 mit Überschreiten des Tempolimits alle Hilfsfunktionen und der Blinker wird über das Lenkrad 2 in üblicher Weise mechanisch zurückgestellt.

Die technische Ausbildung derartiger Kombinationsschalter ist auf verschiedene Art und Weise möglich. Es müssen nur in einer geeigneten kinematischen Vorrichtung Kontaktgeber, Mikroschalter etc. angebracht werden, um diese Funktionen zu erfüllen. In der Kraftfahrzeugbranche werden Vielwege-Kontaktansteuerungen in Verbindung mit der Blinkerfunktion für andere Zwecke benutzt. Auch Kontaktgeber, die in Abhängigkeit vom Ansteuerweg nacheinander Kontaktstellungen verändern und sich über Federkraft selbsttätig wieder in die Ausgangslage zurückstellen, werden verwendet und können für den erfindungsgemäßen Zweck als Konstruktionselemente eingesetzt werden.

Die beschriebene Ausführungsform eines Mehrwegelenkhebels hat den Vorteil, daß kein zusätzlicher Bedienhebel am Lenkrad 2 installiert zu werden braucht.

Um in eine Parknische einzuparken, hält der Fahrer in günstiger örtlicher Distanz zur Parknische und nimmt den Gang heraus (oder bleibt im ersten bzw. Rückwärtsgang). Durch kurze Torsion des Mehrwege-Lenkhebels 1, der z.B. kurz unterhalb des Lenkrads angeordnet ist, aktiviert er die Hilfsfunktion. Dann dirigiert er sich durch Einhandbetätigung aus dem Handgelenk heraus kraftfrei ohne Notwendigkeit das Lenkrad anzufassen, links, rechts, vor, zurück unter gewohnter Verwendung von Kupplung, Gas, Bremse in die Parklücke. Das Ausparken erfolgt analog. Mit dem anschließenden Beschleunigen wird das eingestellte Tempolimit überschritten und der Fahrer übernimmt stufenlos die übliche Lenkradsteuerung.

Bezugszeichenliste:

| 1 | Lenkhebel |
|---|---|
| 2 | Lenkrad |
| 3 | Kanal |
| 4 | Kanal |
| 5 | Kanal |
| 6 | Kanal |
| 7 | Kanal |
| 8 | Kanal |
| 9 | Steuervorrichtung |
| 10 | Kanal |
| 11 | Kanal |
| 12 | Geber |
| 13 | Kupplungspedal |
| 14 | Geber |
| 15 | Kanal |
| 16 | Kanal |
| 17 | Lenk-Aktuator |
| 18 | Rad |
| 19 | Lenkmechanismus |
| 20 | Lenksäule |
| 21 | Kanal |
| 22 | Kanal |
| 23 | Schalt-Aktuator |
| 24 | Schalt-Aktuator |
| 25 | Schaltgetriebe |
| 26 | Leitung |
| 27 | Leitung |
| 28 | Leitung |
| 29 | Grundkörper |
| 30 | Hebelschaft |
| 31 | Zugfeder |
| 32 | Bedienhebel |
| 33 | Welle |
| 34 | Knopf |
| 38 | Torsionsfeder |
| 39 | Bohrung |
| 40 | Richtung |
| 41 | Richtung |
| 42 | Richtung |
| 43 | Richtung |
| 44 | Richtung |
| 45 | Kontaktsegment |
| 46 | Kontaktsegment |
| 47 | Kontaktsegment |
| 48 | Kontaktsegment |
| 49 | Hydrospeicher |
| 50 | Geber |
| 51 | Geber |
| 52 | Geber |
| 53 | Geber |
| 54 | Ausläufer |
| 55 | Kontaktfahne |
| 56 | Geber |
| 57 | Differentialzylinder |
| 58 | Kolbenstange |
| 59 | Kolbenstange |
| 60 | Ventil |
| 61 | Ventil |
| 62 | Ventil |
| 63 | Ventil |
| 65 | Flüssigkeitssammelbehälter |
| 66 | Arbeitskammer |
| 67 | Arbeitskammer |
| 69 | Geber |
| 70 | Geber |
| 71 | Geber |
| 72 | Differentialzylinder |
| 73 | Differentialzylinder |
| 74 | Arbeitskammer |
| 75 | Magnetventil |
| 76 | Arbeitskammer |
| 77 | Magnetventil |

78 Arbeitskammer
79 Magnetventil
80 Magnetventil
81 Arbeitskammer
82 Magnetventil

**Patentansprüche**

1. Verfahren zum Rangieren eines Fahrzeugs mit Rädern, die über einen Lenkmechanismus mit einem Lenkrad verbunden sind, mit einem Antriebsmotor, einer Kupplung, einer Hilfsenergiequelle und einem Schaltgetriebe, das mehrere Vorwärtsgänge und eine Rückwärtsgang aufweist, dadurch gekennzeichnet, daß ein Lenk-Aktuator (17), der auf zwei zueinander entgegengesetzte Wirkungsrichtungen einstellbar ist, und Schalt-Aktuatoren (23, 24) für den ersten Vorwärtsgang und den Rückwärtsgang in Betriebsbereitschaft versetzt werden, daß die Geschwindigkeit des Fahrzeugs auf Null oder einen niedrigen, unter einem oberen Schwellenwert liegenden Wert vermindert wird, daß die Kupplung geöffnet und über ein von Hand betätigbares Steuerelement der erste Vorwärtsgang oder der Rückwärtsgang ausgewählt und der zugeordnete Schalt-Aktuator (23, 24) an die Hilfsenergiequelle gelegt wird, daß die Kupplung geschlossen und das Fahrzeug auf eine unterhalb des Schwellenwerts liegende Geschwindigkeit beschleunigt werden und daß mit einem von Hand betätigbaren Lenkhebel (1) die Wirkungsrichtungen des Lenk-Aktuators (17) entsprechend dem Fahrzeugkurs ausgewählt und der Lenk-Aktuator an die Hilfsenergiequelle gelegt werden.

2. Vorrichtung zum Rangieren eines Fahrzeugs mit Rädern, die über einen Lenkmechanismus mit einem Lenkrad verbunden sind, mit einem Antriebsmotor, einer Kupplung, einer Hilfsenergiequelle und einem Schaltgetriebe, das mehrere Vorwärtsgänge und einen Rückwärtsgang aufweist, insbesondere zur Durchführung des Verfahrens nach Anspruch 1, dadurch gekennzeichnet, daß ein unabhängig vom Lenkrad (2) auf den Lenkmechanismus (19) durch Speisung aus der Hilfsenergiequelle bei einer Freigabe einwirkender Lenk-Aktuator (17) mit zwei zueinander entgegengesetzten Wirkungsrichtungen vorgesehen ist, daß je ein fremdkraftunterstützter Schalt-Aktuator (23, 24) für die Einlegung des ersten Vorwärtsgangs oder des Rückwärtsgangs vorgesehen sind, und daß die Energie der Hilfsenergiequelle für den Lenk-Aktuator (17) und die Schalt-Aktuatoren (23, 24) durch eine Steuervorrichtung (9) freigebbar ist, die den Lenk-Aktuator (17) und die Schalt-Aktuatoren (23, 24) in Abhängigkeit von Eingangssignalen steuert, die von Gebern für den Schaltzustand des Schaltgetriebes (25), für die Fahrzeuggeschwindigkeit und gegebenenfalls der Stellung des Kupplungspedals (13) sowie für Steuerbefehle zur Betätigung des Lenk-Aktuators (17) und der Schalt-Aktuatoren (23, 24) erzeugbar sind, wobei die Geber (50, 51, 52, 53, 56) für die Steuerung des Lenk-Aktuators (17) und/oder der Schalt-Aktuatoren (23, 24) in Abhängigkeit von der Neigung eines zumindest in einer Ebene in zueinander entgegengesetzten Richtungen schwenkbar gelagerten, von Hand schwenkbaren Lenkhebels (1) betätigbar sind, der unter einer Rückstellkraft steht, mit der er bei Wegfall der Handbetätigung in eine vorgegebene Ausgangslage gebracht und darin gehalten wird.

3. Vorrichtung nach Anspruch 2, dadurch gekennzeichnet, daß das Ausgangssignal des Gebers (12) für die Fahrzeuggeschwindigkeit mit einem vorgebbaren Schwellenwert verglichen wird, bei dessen Unterschreitung eine erste Bedingung für die Freigabe des Lenk-Aktuators (17) und der Schalt-Aktuatoren (23, 24) erfüllt ist.

4. Vorrichtung nach Anspruch 2 oder 3, dadurch gekennzeichnet, daß der Geber (14) für das Kupplungspedal (13) bei offener Kupplung ein Signal an die Steuervorrichtung (9) ausgibt, bei dessen Auftreten eine zweite Bedingung für die Freigabe des Lenk-Aktuators (17) und der Schalt-Aktuatoren (23, 24) erfüllt ist.

5. Vorrichtung nach einem der Ansprüche 2 bis 4, dadurch gekennzeichnet, daß bei Abgabe eines Steuersignals durch einen ersten oder zweiten, bei Schwenkung des Lenkhebels (1) betätigbaren Geber (53, 51) der Lenk-Akktuator (17) über die Steuervorrichtung (9) jeweils auf Rechts- oder Links-Einschlag der Räder (18) des Fahrzeugs mit Hilfsenergie beaufschlagbar ist.

6. Vorrichtung nach einem der Ansprüche 2 bis 4, dadurch gekennzeichnet, daß bei Abgabe eines Steuersignals von dem ersten oder zweiten, bei Schwenkung des Lenkhebels (1) betätigbaren Geber über die Steuervorrichtung (9) jeweils der Schalt-Aktuator (23, 24) für die Einlegung des ersten Vorwärtsgangs oder des Rückwärtsganges mit Hilfsenergie beaufschlagbar ist.

7. Vorrichtung nach Anspruch 2 oder einem der folgenden Ansprüche, dadurch gekennzeichnet, daß der Lenkhebel (1) zumindest in zwei aufeinander senkrecht stehenden Ebenen je in zueinander entgegengesetzten Richtungen (40, 41, 42, 43) schwenkbar angeordnet ist, und daß in der ersten Ebene in zwei symmetrisch zur Ausgangslage verlaufenden Neigungen eines Bedienhebels (32) des Lenkhebels (1) je ein Geber (50, 52) für den einen und den anderen Schalt-Aktuator (23, 24) und in der zweiten Ebene in mindestens zwei symmetrisch zur Ausgangslage verlaufenden Neigungen jeweils ein Geber (53, 51) für den Rechtseinschlag bzw. Linkseinschlag der Räder (18) betätigbar ist.

8. Vorrichtung nach Anspruch 2 oder einem der folgenden Ansprüche, dadurch gekennzeichnet, daß die Steuervorrichtung (9) bei Erfüllung der ersten und zweiten Bedingung durch ein Signal von einem Geber (56) in Betriebsbereitschaft versetzbar ist, das durch Drehung des Bedienhebels (32) um seine Längsachse erzeugbar ist.

9. Vorrichtung nach Anspruch 2 oder einem der folgenden Ansprüche, dadurch gekennzeichnet, daß der Lenkhebel (1) einen ortsfest angeordneten Hebelschaft (30) aufweist, der über eine Zugfeder (31) mit dem Bedienhebel (32) verbunden ist, daß seitlich neben der Zugfeder (31) in gleichmäßigen Abständen Kontaktsegmente (45, 46, 47, 48) angeordnet sind, die bei Berührung mit der Zugfeder (31) Stromkreise schließen, daß innerhalb des Bedienhebels (32) und des Hebelschafts (30) eine flexible Welle (33) aus Isoliermaterial mit einem außerhalb des Bedienhebels (32) angeordneten Knopf (34) drehbar gelagert ist, und daß an dem zweiten Ende der Welle (33) ein Vorsprung aus elektrisch leitendem Material angeordnet ist, dem eine neben dem Ende angeordnete Kontaktfahne (55) zugeordnet ist, die bei Berührung mit dem Vorsprung einen Stromkreis schließt.

10. Vorrichtung nach Anpruch 2 oder einem der folgenden Ansprüche, dadurch gekennzeichnet, daß der Lenkhebel (1) hinter dem Lenkrad (2) angeordnet ist.

11. Vorrichtung nach einem der Ansprüche 2 bis 9, dadurch gekennzeichnet, daß der Lenkhebel (1) nach Art eines Gangschaltknüppels an einer leicht zugänglichen Stelle des Cockpit eines Fahrzeugs angeordnet ist.

12. Vorrichtung nach einem der Ansprüche 2 bis 9, dadurch gekennzeichnet, daß der Hebel einer Gangschaltung zugleich als Lenkhebel in Leerlaufstellung der Gangschaltung ausgebildet ist und daß die Steuervorrichtung durch ein gesondertes Steuersignal in Betriebsbereitschaft versetzbar ist.

13. Vorrichtung nach einem der Ansprüche 2 bis 9, dadurch gekennzeichnet, daß in einem Fahrzeug mit Automatikgetriebe der Hebel für das Getriebe zugleich als Lenkhebel in Nullstellung ausgebildet ist, und daß die Steuervorrichtung durch ein gesondertes Steuersignal in Betriebsbereitschaft versetzbar ist.

14. Vorrichtung nach einem der Ansprüche 2 bis 9, dadurch gekennzeichnet, daß der an der Lenksäule (20) eines Fahrzeugs befestigte Hebel für die Blinkerbetätigung zugleich der Lenkhebel für die Erzeugung der Steuersignale für die Steuervorrichtung ist.

15. Vorrichtung nach Anspruch 14, dadurch gekennzeichnet, daß die Geber (51, 53) für die Erzeugung der Steuersignale für die Rangierbewegung in der gleichen Bewegungsebene wie die Geber für die Richtungsanzeige angeordnet und bei einem größeren Neigungswinkel des Lenkhebels gegen die Ausgangslage betätigbar sind als die Geber für die Richtungsanzeige.

16. Vorrichtung nach Anspruch 2 oder einem der folgenden Ansprüche, dadurch gekennzeichnet, daß als Hilfsenergiequelle eine Stromquelle vorgesehen ist, und daß der Lenk-Aktuator und die Schalt-Aktuatoren elektrodynamisch arbeitende Stellelemente sind.

17. Vorrichtung nach einem der Ansprüche 2 bis 15, dadurch gekennzeichnet, daß als Hilfsenergiequelle ein Druckbehälter vorgesehen ist, und daß der Lenk-Aktuator (17) und die Schalt-Aktuatoren (23, 24) doppeltwirkende Differentialzylinder (57, 72, 73) mit in zueinander entgegengesetzten Richtungen verschiebbaren Kolben aufweisen, und daß die Druckbeaufschlagung der Arbeitskammern (66, 67; 74, 78; 76, 81) der Differentialzylinder (57, 72, 73) über Ventile (60, 61, 62, 63; 75, 77, 80, 82) steuerbar ist.

18. Vorrichtung nach Anspruch 17, dadurch gekennzeichnet, daß die beiden Arbeitskammern (66, 67) des Differentialzylinders (57) des Lenk-Aktuators (17) je über ein Ventil (60, 61) mit einem Hydrospeicher (49) und je über ein Ventil (62, 63) mit einem Flüssigkeitssammelbehälter (65) verbunden sind, daß der Kolben des Differentialzylinders (57) über Kolbenstangen (58, 59) mit dem Lenkmechanismus (19) verbunden ist, und daß die Ventile (60, 61) Magnetventile sind, deren Spulen an die Steuervorrichtung (9) angeschlossen sind.

19. Vorrichtung nach Anspruch 17 oder 18, dadurch gekennzeichnet, daß die Schaltmuffen für den ersten Vorwärtsgang und den Rückwärtsgang des Schaltgetriebes (25) jeweils über ein Gestänge und eine Kolbenstange mit den Kolben der Differentialzylinder (73, 72) verbunden sind, daß die beiden Arbeitskammern (74; 81) jedes Differentialzylinders (73, 72) für zueinander entgegengesetzte Kolbenbewegungen gemeinsam an ein erstes Magnetventil (75) angeschlossen sind, daß die beiden anderen Arbeitskammern (78; 81) jeweils sowohl mit einem zweiten als auch mit einem dritten Magnetventil (79, 77; 80, 82) verbunden sind, daß die zweiten Magnetventile (79, 77) mit dem ersten Magnetventil (75), das eingangsseitig an den Hydrospeicher (49) angeschlossen ist, und die dritten Magnetventile (80, 82) mit dem Flüssigkeitssammelbehälter (65) verbunden sind, daß Geber (69, 70) für die Stellungen der Gestänge vorgesehen sind und daß die Geber (69, 70) und die Spulen der Magnetventile (75, 77, 79, 80, 82) an die Steuervorrichtung (9) angeschlossen sind.

20. Vorrichtung nach einem der vorhergehenden Ansprüche, dadurch gekennzeichnet, daß der Lenkhebel (1) einen aperiodisch wirkenden Dämpfungsmechanismus aufweist, der auf die Rückstellkraft einwirkt.

21. Vorrichtung nach einem der vorhergehenden Ansprüche, dadurch gekennzeichnet, daß die Steuervorrichtung (9) in bezug auf die erste Bedingung eine Hysterese aufweist, durch die bei Überschreiten des Schwellenwerts um einen einstellbaren Wert die Steuersignale für den Lenk-Aktuator (17) und die Schalt-Aktuatoren (23, 24) abschaltbar sind.

22. Vorrichtung nach einem der Ansprüche 2 bis 8, dadurch gekennzeichnet, daß zumindest einige der Geber (50, 51, 52, 53, 56) Analoggeber sind.

23. Vorrichtung nach Anspruch 22, dadurch gekennzeichnet, daß die Analoggeber Potentiometer sind.

24. Vorrichtung nach einem der Ansprüche 2 bis 23, dadurch gekennzeichnet, daß die Steuervorrichtung (9) einen Mikrorechner enthält, an dessen Eingabe/Ausgabeschaltung die Geber (12, 14; 51 bis 53, 56; 69; 70) und die Spulen der Ventile (60 bis 63; 75, 77, 79, 80, 82) angeschlossen sind.

25. Vorrichtung nach einem der vorhergehenden Ansprüche, dadurch gekennzeichnet, daß der Hydrospeicher (49) zugleich für die Energieversorgung einer Bremsschlupfregeleinrichtung im Fahrzeug vorgesehen ist.

## Claims

1. A process of manoevring an automotive vehicle comprising wheels, which, through a steering mechanism, are in communication with a steering wheel, further comprising a driving motor, a coupling, an auxiliary energy source and a change-speed gear including a plurality of forward gears and one reverse gear, characterized in that a steering actuator (17) adjustable to two opposite directions of operation and gear-shift actuators (23, 24) for the first forward gear and the reverse gear, are placed in a condition ready for operation, that the speed of the automotive vehicle is reduced to zero or to a low value under an upper threshold value, that the coupling is opened and the first forward gear or the reverse gear is selected through a manually actuatable control element, and the associated gear-shift actuator (23, 24) is applied to the auxiliary energy source, that the coupling is closed and the automotive vehicle accelerated to a speed below the threshold value, and that the operating directions of the steering actuator (17) are selected by a manually operable steering lever (1) in accordance with the driving direction of the automotive vehicle, and that the steering actuator is applied to the auxiliary energy source.

2. An apparatus for manoevring an automotive vehicle comprising wheels which, through a steering mechanism, are in communication with a steering wheel, further comprising a driving motor, a coupling, an auxiliary energy source and a change-speed gear including a plurality of forward gears and one reverse gear, in particular, for carrying into effect the process of claim 1, characterized in that a steering actuator (17) is provided having two opposite directions of operation and acting independently of the steering wheel (2) on the steering mechanism (19) through energizing from the auxiliary energy source upon a release, that respectively one external force-supported gear-shift actuator (23,24) is provided for engaging the first forward gear or the reverse gear, and that the energy of the auxiliary energy source for the steering actuator (17) and the gear-shift actuators (23,24) is releasable by a control mechanism (9) controlling the steering actuator (17) and the change-speed actuators (23,24) in response to the input signals that can be generated by generators for the gear-shift condition of the change-speed gear (25), for the automotive speed and, if need be, for the position of the coupling pedal (13) and for control commands for actuating the steering actuator (17) and the gear-shift actuators (23,24), with the generators (50,51,52,53,56) for the control of the steering actuator (17) and/or the gear-shift actuators (23,24) being operable in response to the inclination of a manually swivable steering lever (1) pivotably disposed in opposite directions at least in one plane, with the said lever (1) being under a restoring force by which, in case of failure of the hand operation, it is placed in a predetermined initial position and is held therein.

3.  An apparatus according to claim 2, characterized in that the output signal of the generator (12) for the speed of the automotive vehicle is compared with a predetermined threshold value reaching of which fulfils a first condition for the release of the steering actuator (17) and the gear-shift actuators (23,24).

4.  An apapratus according to any one of claims 2 or 3, characterized in that the generator (14) for the coupling pedal (13), with the coupling opened, provides a signal to the control mechanism (9), upon occurrence of which a second condition is fulfilled for the release of the steering actuator (17) and the gear-shift actuators (23,24).

5.  An apparatus according to any one of claims 2 to 4, characterized in that upon release of a control signal by a first or a second generator (53,51) operable upon a pivot movement of the steering lever (1), auxiliary energy is applied to the steering actuator (17), through the control mechanism (9), respectively upon a right-hand or a left-hand lock of the wheels (18) of the automotive vehicle.

6.  An apparatus according to any one of claims 2 to 4, characterized in that upon release of a control signal by the first or second generator operable upon a pivot movement of the steering lever (1), auxiliary energy is applicable, through the control mechanism (9) respectively to the gear-shift actuator (23,24) for engaging the first forward gear or the reverse gear.

7.  An apparatus according to claim 2 or any one of the following claims, characterized in that the steering lever (1) is pivotably located respectively in opposite directions (40,41,42,43) at least in two planes vertical with respect to one another, and that, in the first plane at two inclinations of an operating lever (32) of the steering lever (1) extending in symmetry with the initial position, respectively one generator (50,52) for the one and for the other gear-shift actuator (23,24), and in the second plane at least at two inclinations extending in symmetry with the initial position, respectively one generator (53,51) is actuable for the right-hand lock and for the left-hand lock, respectively of the wheels (18).

8.  An apparatus according to claim 2 or any one of the following claims, characterized in that the control mechanism (9), upon fulfilment of the first and second conditions, can be placed in a condition ready for operation by a signal provided by a generator (56) and generated by turning the operating lever (32) about its longitudinal axis.

9.  An apparatus according to claim 2 or any one of the preceding claims, characterized in that steering lever (1) comprises a stationary lever shaft (30) which, through a tension spring (31), is in communication with the operating lever (32), that contact segments (45,46,47,48) are equidistantly disposed in side-by-side relationship with the tension spring (31), with the said contact segments, when touching the tension spring (31) closing circuits, that a flexible shaft (33) of insulating material having a head (34) located externally of the operating lever (32) is pivotably disposed within the operating lever (32) and the lever shaft (30), and that disposed on the second end of the shaft (33) is a projection of electrically conductive material to which is associated a contact lug (55) located in side-by-side relationship with the end, with said contact lug, when touching the projection, closing a circuit.

10.  An apparatus according to claim 2 or any one of the following clams, characterized in that the steering lever (1) is located behind the steering wheel (2).

11.  An apparatus according to any one of claims 2 to 9, characterized in that the steering lever (1), in the way of a gear-shift control column, is located at an easily accessible point of the cockpit of an automotive vehicle.

12. An apparatus according to any one of claims 2 to 9, characterized in that the lever of a gearshift control, at the same time, is configured as a steering lever in the idle position of the gearshift control, and that the control mechanism can be placed in a condition ready for operation by a separate control signal.

13. An apparatus according to any one of claims 2 to 9, characterized in that in an automative vehicle provided with an automatic gear, the lever for the gear at the same time is configured as a steering lever in the zero-position, and that the control mechanism can be placed in a condition ready for operation by a separate control signal.

14. An apparatus according to any one of claims 2 to 9, characterized in that the lever for the actuation of the flashing-light direction indicator secured to the steering column (20) of an automotive vehicle, at the same time, is the steering lever for generating the control signals for the control mechanism.

15. An apparatus according to claim 14, characterized in that the generators (51,53) for the generation of the control signals for the manoevring movement are located in the same plane of movement as the generators for the directional indication and are operable at a larger angle of inclination of the steering lever against the initial position than the generators for the directional indication.

16. An apparatus according to claim 2 or any one of the following claims, characterized in that a current source is provided to serve as an auxiliary energy source, and that the steering actuator and the gear-shift actuators are electrodynamically operating control elements.

17. An apparatus according to any one of claims 2 to 15, characterized in that a pressure accumulator is provided as an auxiliary energy source, and that the steering actuator (17) and the gear-shift actuators (23,24) are dual-acting differential cylinders (57, 72, 73) having pistons displaceable in opposite directions, and that the application of pressure to the working chambers (66,67; 74,78; 76,81) of the differential cylinders (57,72,73) is controllable through valves (60,61,62,63; 75,77,79,80,82).

18. An apparatus according to claim 17, characterized in that the two working chambers (66,67) of the differential cylinder (57) of the steering actuator (17), respectively through a valve (60,61), are in communication with a hydraulic accumulator (49), and respectively through a valve (62,63) are in communication with a liquid reservoir (65), that the piston of the differential cylinder (57), through piston rods (58,59) is in communication with the steering mechanism (19), and that the valves (60,61) are solenoid valves the coils of which are in communication with the control mechanism (9).

19. An apparatus according to claims 17 or 18, characterized in that the gear-shift sleeves for the first forward gear and for the reverse gear of the change-speed gear (25), respectively through a linkage and a piston rod, are in communication with the pistons of the differential cylinders (73,72), that the two working chambers (74;81) of each differential cylinder (73,72) for opposite piston movements commonly are in communication with a first solenoid valve (75), that the two other working chambers (78;81) are in communication both with a second and with a third solenoid valve (79,77; 80,82), that the second solenoid valves (79,77) are in communication with the first solenoid valve (75) connected, at the input side, to the hydraulic accumulator (49), and that the third solenoid valves (80,82) are in communication with the liquid reservoir (65), that generators (69,70) are provided for the positions of the linkages, and that the generators (69,70) and the coils of the solenoid valves (75,77, 79,80,82) are connected to the control mechanism (9).

20. An apparatus according to any one of the preceding claims, characterized in that the steering lever (1) comprises an attenuation mechanism of aperiodic effect that acts upon the restoring force.

21. An apparatus according to any one of the preceding claims, characterized in that the control mechanism (9) relative to the first condition exhibits a hysteresis, through which, upon exceeding the threshold value by an adjustable amount, the control signals for the steering actuator (17) and the gear-shift actuators (23,24) can be switched off.

22. An apparatus according to any one of claims 2 to 8, characterized in that at least some of the generators (50,51,52,53,56) are analog generators.

23. An apapratus according to claim 22, characterized in that the analog generators are potentiometers.

24. An apparatus according to any one of claims 2 to 23, characterized in that the control mechanism (9) contains a microcomputer to the input/output circuit of which the generators (12,14; 51 to 53, 56; 69;70) and the coils of valves (60 to 63; 75, 77, 79, 80, 82) are connected.

25. An apparatus according to any one of the preceding claims, characterized in that the hydraulic accumulator (49), at the same time, is provided for the energy supply of a brake skid control means in the automotive vehicle.

**Revendications**

1. Procédé pour garer un véhicule ayant des roues qui sont reliées à un volant de direction par l'intermédiaire d'un mécanisme de direction, ayant un moteur d'entraînement, un embrayage, une source d'énergie auxiliaire et une boîte de vitesses qui présente plusieurs rapports avant et un rapport arrière, caractérisé en ce qu'un actionneur de direction (17), amenable dans deux sens d'action opposés, et des actionneurs de sélection (23,24) pour le premier rapport avant et pour le rapport arrière sont amenés en état de service, en ce que la vitesse du véhicule est réduite à zéro ou à une valeur faible inférieure à une valeur de seuil supérieure, en ce que l'embrayage est débrayé, le premier rapport ou le rapport arrière est sélectionné à l'aide d'un élément de commande manuelle et l'actionneur de sélection associé (23,24) est appliqué à la source d'énergie auxiliaire, en ce que l'embrayage est embrayé et le véhicule est accéléré à une vitesse inférieure à la valeur de seuil ,et en ce qu'à l'aide d'un levier de direction (1) actionnable à la main, le sens d'action de l'actionneur de direction (17) est sélectionné conformément au cap du véhicule et l'actionneur de direction est appliqué à la source d'énergie auxiliaire.

2. Dispositif pour garer un véhicule ayant des roues qui sont reliées à un volant de direction par l'intermédiaire d'un mécanisme de direction, ayant un moteur d'entraînement, un embrayage, une source d'énergie auxiliaire et une boîte de vitesses qui présente plusieurs rapports avant et un rapport arrière, notamment pour la mise en oeuvre du procédé selon la revendication 1, caractérisé en ce qu'il est prévu un actionneur de direction (17) à deux sens d'action opposés qui, lorsqu'il est libéré, agit indépendamment du volant de direction (2) sur le mécanisme de direction (19) en étant alimenté par la source d'énergie auxiliaire, en ce que sont prévus des actionneurs de sélection respectifs (23,24), assistés par une force extérieure, pour l'application du premier rapport avant ou du rapport arrière ,et en ce que l'énergie de la source d'énergie auxiliaire, destinée à l'actionneur de direction (17) et aux actionneurs de sélection (23,24), peut être libérée par un dispositif de commande (9) qui commande l'actionneur de direction (17) et les actionneurs de sélection (23, 24) en fonction de signaux d'entrée qui peuvent être produits par des transmetteurs de l'état de sélection de la boîte de vitesses (25), de la vitesse du véhicule et éventuellement de la position de la pédale d'embrayage (13), ainsi que par des transmetteurs d'ordres de commande, pour l'actionnement de l'actionneur de direction (17) et des actionneurs de sélection (23,24), les transmetteurs (50,51,52,53,56) pour la commande de l'actionneur de direction (17) et/ou des actionneurs de sélection (23,24) pouvant être actionnés en fonction de l'inclinaison d'un levier de direction (1) qui est monté en pivotement au moins dans un plan dans des sens opposés, qui peut être pivoté à la main et qui est soumis à l'action d'une force de rappel qui l'amène et le maintient à une position neutre allouée lorsqu'il n'est plus actionné à la main.

3. Dispositif selon la revendication 2, caractérisé en ce que le signal de sortie du transmetteur (12) de la vitesse du véhicule est comparé à une valeur de seuil allouable, une première condition de libération de l'actionneur de direction (17) et des actionneurs de sélection (23,24) étant remplie en cas de sous-dépassement de cette valeur.

4. Dispositif selon la revendication 2 ou 3, caractérisé en ce que le transmetteur (14) de la pédale d'embrayage (13) délivre au dispositif de commande (9) un signal lorsque l'embrayage est débrayé, une deuxième condition de libération de l'actionneur de direction (17) et des actionneurs de sélection (23,24) étant remplie lors de l'apparition de ce signal.

5. Dispositif selon l'une des revendications 2 à 4, caractérisé en ce que, lors de la délivrance d'un signal de commande par un premier ou deuxième transmetteur (53,51) pouvant être actionné en faisant pivoter le levier de direction (1), l'actionneur de direction (17) peut être sollicité par l'énergie auxiliaire, par l'intermédiaire du dispositif de commande (9), en vue respectivement d'un braquage à droite ou à gauche des roues (18) du véhicule.

6. Dispositif selon l'une des revendications 2 à 4, caractérisé en ce que, lors de la délivrance d'un signal de commande par le premier ou le deuxième transmetteur actionnable en faisant pivoter le levier de direction (1), l'actionneur de sélection (23,24) peut être sollicité par l'énergie auxiliaire, par l'intermédiaire du dispositif de commande (9), pour enclencher respectivement le premier rapport avant ou le rapport arrière.

7. Dispositif selon la revendication 2 ou l'une des revendications suivantes, caractérisé en ce que le levier de direction (1) est disposé en pivotement dans au moins deux plans orthogonaux, chaque fois dans des sens opposés (40,41,42,43), et en ce que, dans le premier plan, un transmetteur (50,52) de l'un ou l'autre des actionneurs de sélection (23,24) peut être respectivement actionné dans l'une ou l'autre de deux inclinaisons d'un levier de manoeuvre (32) du levier de direction (1), inclinaisons qui s'étendent symétriquement par rapport à la position neutre et, dans le deuxième plan, un transmetteur (53, 51) du braquage à droite ou à gauche des roues (18) peut être actionné dans l'une ou l'autre d'au moins deux inclinaisons qui s'étendent symétriquement par rapport à la position neutre.

8. Dispositif selon la revendication 2 ou l'une des revendications suivantes, caractérisé en ce que le dispositif de commande (9) peut être amené en état de service lorsque la première et la deuxième conditions sont remplies, par un signal qui provient d'un transmetteur (56), et qui peut être produit par rotation du levier de manoeuvre (32) autour de son axe longitudinal.

9. Dispositif selon la revendication 2 ou l'une des revendications suivantes, caractérisé en ce que le levier de direction (1) présente un corps de levier (30), disposé stationnairement, qui est relié au levier de manoeuvre (32) par l'intermédiaire d'un ressort de traction (31), en ce que des segments de contact (45,46,47,48) sont disposés à distances régulières sur le côté du ressort de traction (31) et ferment des circuits électriques lorsqu'ils entrent en contact avec le ressort de traction (31), en ce qu'un arbre flexible (33) en matériau isolant, muni d'une tête (34) disposée à l'extérieur du levier de manoeuvre (32), est monté rotatif à l'intérieur du levier de manoeuvre (32) et du corps de levier (30), et en ce qu'une partie en saillie en matériau électriquement conducteur est disposée à la deuxième extrémité de l'arbre (33), saillie à laquelle est associée une aile de contact (55), disposée à côté de ladite extrémité, qui ferme un circuit électrique lorsqu'elle entre en contact avec la saillie.

10. Dispositif selon la revendication 2 ou l'une des revendications suivantes, caractérisé en ce que le levier de direction (1) est disposé derrière le volant de direction (2).

11. Dispositif selon l'une des revendications 2 à 9, caractérisé en ce que le levier de direction (1) est disposé, à la manière d'une commande de vitesses au plancher, en un endroit facilement accessible d'un poste de conduite d'un véhicule.

12. Dispositif selon l'une des revendications 2 à 9, caractérisé en ce qu'un levier de changement de vitesses sert simultanément de levier de direction dans sa position de point mort et en ce que le dispositif de commande peut être amené en état de service par un signal de commande particulier.

13. Dispositif selon l'une des revendications 2 à 9, caractérisé en ce que, dans un véhicule à boîte de vitesses automatique, le levier de sélection de la boîte sert simultanément de levier de direction dans sa position neutre et en ce que le dispositif de commande peut être amené en état de service par un signal de commande particulier.

14. Dispositif selon l'une des revendications 2 à 9, caractérisé en ce que le levier fixé sur la colonne de direction (20) d'un véhicule en vue de l'actionnement des indicateurs de direction, sert simultanément de levier de direction pour produire les signaux de commande destinés au dispositif de commande.

15. Dispositif selon la revendication 14, caractérisé en ce que les transmetteurs (51,53) destinés à produire les signaux de commande pour les manoeuvres de garage sont disposés dans le même plan de déplacement que les transmetteurs pour l'indication de direction et peuvent être actionnés en présence d'un plus grand angle d'inclinaison du levier de direction par rapport à la position neutre que les transmetteurs pour l'indication de direction.

16. Dispositif selon la revendication 2 ou l'une des revendications suivantes, caractérisé en ce qu'une source de courant est prévue comme source d'énergie auxiliaire et en ce que l'actionneur de direction et les actionneurs de sélection sont des servoéléments travaillant de façon électrodynamique.

17. Dispositif selon l'une des revendications 2 à 15, caractérisé en ce qu'un réservoir sous pression est prévu comme source d'énergie auxiliaire et en ce que l'actionneur de direction (17) et les actionneurs de sélection (23,24) comportent des cérins différentiels à double action (57,72,73) munis de pistons coulissants dans des sens opposés et en ce que la sollicitation en pression des chambres de travail (66,67; 74,78; 76,81) des vérins différentiels (57,72,73) peut être commandée par l'intermédiaire de valves (60,61,62,63; 75,77,79,80,82).

18. Dispositif selon la revendication 17, caractérisé en ce que les deux chambres de travail (66,67) du vérin différentiel (57) de l'actionneur de direction (17) sont reliées par l'intermédiaire d'une valve respective (60,61) à un accumulateur hydraulique (49) et par l'intermédiaire d'une valve respective (62,63) à un récipient collecteur de liquide (65), en ce que le piston du vérin différentiel (57) est relié au mécanisme de direction (19) par l'intermédiaire de tiges de piston (58,59), et en ce que les valves (60,61) sont des électrovalves dont les bobines sont raccordées au dispositif de commande (9).

19. Dispositif selon la revendication 17 ou 18, caractérisé en ce que les manchons coulissants pour le premier rapport avant et le rapport arrière de la boîte de vitesses (25) sont respectivement reliés, par l'intermédiaire d'une tringlerie et d'une tige de piston, aux pistons des différentiels (73,72), en ce que les deux chambres de travail (74; 81) de chaque vérin différentiel (73,72), pour des déplacements mutuellement opposés du piston, sont raccordées conjointement à une première électrovalve (75), en ce que les deux autres chambres de travail (78; 81) sont respectivement reliées tant à une deuxième qu'à une troisième électrovalve (79,77; 80,82), en ce que les deuxièmes électrovalves (79,77) sont reliées à la première électrovalve (75), qui est raccordée côté entrée à l'accumulateur hydraulique (49) ,et les troisièmes électrovalves (80,82) sont reliées au récipient collecteur de liquide (65), en ce que des transmetteurs (69,70) des positions des tringleries sont prévus, et en ce que les transmetteurs (69,70) et les bobines des électrovalves (75,77,79,80,82) sont raccordés au dispositif de commande (9).

20. Dispositif selon l'une des revendications précédentes, caractérisé en ce que le levier de direction (1) présente un mécanisme d'amortissement à action apériodique, qui agit sur la force de rappel.

21. Dispositif selon l'une des revendications précédentes, caractérisé en ce que le dispositif de commande (9) présente, en ce qui concerne la première condition, une hystérèse qui, si la valeur de seuil est dépassée d'une valeur réglable, permet de couper les signaux de commande pour l'actionneur de direction (17) et les actionneurs de sélection (23,24).

22. Dispositif selon l'une des revendications 2 à 8, caractérisé en ce qu'au moins certains des transmetteurs (50,51,52,53,56) sont des transmetteurs analogiques.

23. Dispositif selon la revendication 22, caractérisé en ce que les transmetteurs analogiques sont des potentiomètres.

24. Dispositif selon l'une des revendications 2 à 23, caractérisé en ce que le dispositif de commande (9) contient un micro-calculateur, au montage d'entrée/sortie duquel sont raccordés les transmetteurs (12,14; 51 à 53,56; 69; 70) et les bobines des valves (60 à 63; 75,77,79,80,82).

25. Dispositif selon l'une des revendications précédentes, caractérisé en ce que l'accumulateur hydraulique (49) sert simultanément à alimenter un dispositif de régulation de patinage/des freins.

Fig.1

Schaltgetriebe-Aktuator

Lenk-Aktuator

ANSTEUER-LOGIK

Kupplungspedal

Geschw.-Messer

Mehrwege-Kontakthebel

Fig.2

Fig.3

Fig.4

Fig. 5

G4 G3  G2 G1

69  78  73  25

71

Antrieb  Abtrieb

74

79

80

65

49

75

82

76

70

77

GR  81  72

EP 0 300 233 B1

Fig.6